# EUROPÄISCHE PATENTSCHRIFT

(11) **EP 3 849 035 B1**
(45) Veröffentlichungstag und Bekanntmachung des Hinweises auf die Patenterteilung: **04.09.2024**
(21) Anmeldenummer: 20215589.1
(22) Anmeldetag: 18.12.2020
(51) Int. Cl.: H02G 7/12

(54) **FELDABSTANDHALTER SOWIE VERFAHREN ZUR VORMONTAGE EINES FELDABSTANDHALTERS**
AERIAL CABLE SPACER AND METHOD FOR PRE-ASSEMBLING SUCH SPACER
ÉCARTEUR DE CHAMP ET MÉTHODE DE PRÉ-ASSEMBLAGE D'UN TEL ÉCARTEUR

(30) Priorität: 13.01.2020 DE 102020200329
(43) Veröffentlichungstag der Anmeldung: 14.07.2021
(73) Patentinhaber: Richard Bergner Holding GmbH & Co. KG, 91126 Schwabach (DE)
(72) Erfinder: MOSER, Reinhold, 90768 Fürth (DE); Reichel, Stefan, 91126 Kammerstein (DE)
(74) Vertreter: FDST Patentanwälte

(56) Entgegenhaltungen:
- DE-B- 1 285 033
- GB-A- 2 023 943
- GB-A- 2 286 727
- US-A- 4 188 502

## Beschreibung

Die Erfindung betrifft einen Feldabstandhalter für mehrere Seile einer Freileitung, welcher einen Träger aufweist, an dem mehrere Klemmen für jeweils ein Seil befestigt sind, wobei eine jeweilige Klemme einen Klemmarm aufweist, welcher am Träger befestigt ist. Der Klemmarm ist dabei üblicherweise schwenkbeweglich, also um eine Schwenkachse schwenkbar am Träger befestigt. Weiterhin ist ein zwischen dem Schwenkarm und dem Träger wirksames elastisches Dämpfungselement angeordnet. Dieses ist zwischen dem Träger und dem Klemmarm angeordnet. Die Erfindung betrifft weiterhin ein Verfahren zur Vormontage eines solchen Feldabstandhalters.

Derartige Feldabstandhalter, auch als Bündelabstandshalter bezeichnet, dienen zum beabstandeten Halten von mehreren Seilen einer Freileitung. Bei den Seilen handelt es sich typischerweise um Leiterseile, wobei die Seile insbesondere einen Bündelleiter bilden und eine gemeinsame Phase definieren. Ein typischer Bündelleiter weist beispielsweise zwei bis vier Leiterseile auf.

Feldabstandhalter sind beispielsweise in der DE 10 2016 202 789 A1 beschrieben. Für das jeweilige Dämpfungselement werden elastische Kunststoff-Werkstoffe, beispielsweise Silikongummi, eingesetzt. Die Träger sind durch zwei Halbschalen gebildet, zwischen denen die einzelnen Dämpfungselemente zusammen mit den zu befestigenden Klemmarmen eingelegt werden, bevor dann die beiden Halbschalen des Trägers zusammengeführt und mittels Schrauben miteinander verbunden werden.

Aufgrund der im Betrieb an der Freileitung typischerweise anliegenden hohen Spannungen (typischerweise >1kV, beispielsweise 110 kV bei einer Überland-Leitung) und den übertragenen Strömen bilden sich starke elektrische/magnetische Felder um die üblicherweise unisolierten Leiterseile herum aus. Im Betrieb kommt es aufgrund dieser hohen Felder teilweise zu elektrischen Entladungen, die im Bereich einer jeweiligen Klemme langfristig zu einer Schwächung und Schädigung beispielsweise des Leiterseils und/oder der Klemme bzw. des Feldabstandhalters führen können. Darüber hinaus ist die Herstellung und Montage eines solchen Feldabstandhalters insgesamt aufwendig und kostenintensiv.

Aus der GB 2 023 943 A sowie der US 4 188 502 A sind jeweils Feldabstandhalter zu entnehmen, welche einen einstückigen Träger aufweisen, an dem über Schraubbolzen mehrere Klemmarme unter Zwischenlage eines jeweiligen Dämpfungselements befestigt sind. Die GB 2 286 727 A beschreibt ebenfalls einen Feldabstandhalter mit einem Träger, an dem über Schraubbolzen und unter Zwischenlage von Dämpfungselementen Klemmarme befestigt sind.

Ausgehend hiervon liegt der Erfindung die Aufgabe zugrunde, einen verbesserten Feldabstandhalter anzugeben, welcher einfach herstellbar und montierbar ist und bei dem eine gute Verbindung zwischen Klemmarm und Träger hergestellt ist.

Die Aufgabe wird gemäß der Erfindung gelöst durch einen Feldabstandhalter mit den Merkmalen des Anspruchs 1 sowie durch ein Verfahren mit den Merkmalen des Anspruchs 12. Der Feldabstandhalter für mehrere Seile einer Freileitung, insbesondere einer Überland-Leitung zur Stromverteilung, weist einen Träger auf, an dem mehrere Klemmen für jeweils ein Seil befestigt sind. Eine jeweilige Klemme weist dabei einen Klemmarm auf, welcher mit seinem einen Ende insbesondere um eine Schwenkachse schwenkbeweglich am Träger befestigt ist. An seinem anderen Ende ist eine Aufnahme zur klemmenden Fixierung des jeweiligen Seils ausgebildet. Zwischen dem Klemmarm und dem Träger liegt ein elastisches Dämpfungselement ein. Dieses dient zur Dämpfung von evtl. während des Betriebs auftretenden Bewegungen, beispielsweise Schwingungen und Verschiebungen. Der Klemmarm ist dabei als ein mechanisch eigensteifes und formfestes Bauteil ausgebildet. Speziell ist er ein einstückiges Bauteil. Beispielsweise ist es ein Gussbauteil. Der Träger ist weiterhin als ein einstückiges Gussbauteil ausgebildet, insbesondere aus Metall und speziell aus Aluminium.

Im Unterschied zu herkömmlichen Trägern eines derartigen Feldabstandhalters, die schalenartig und damit zweiteilig aufgebaut sind, wird durch die einstückige Ausgestaltung eine deutlich einfachere Montage ermöglicht. Es ist kein stapelartiger Aufbau zwischen Halbschalen des Trägers, den Klemmen sowie den Dämpfungselementen und ein Verschrauben erforderlich. Ein weiterer Vorteil ist in der verbesserten Stabilität und Festigkeit des Trägers im Vergleich zu einem mehrschaligen Aufbau zu sehen. Speziell sind im Träger keine Bohr- oder Schraublöcher angeordnet. Es befinden sich also im Träger insbesondere keine Schwächungspunkte.

Unter "Träger" wird vorliegend allgemein ein Gestell oder Gerüst verstanden, an dem die Klemmen befestigt sind. Bei dem Träger handelt es sich als Gussbauteil um ein einstückiges monolithisches Bauteil. Das Gestell bzw. der Träger weist dabei mehrere Endbereiche auf, an denen die Klemmen befestigt sind. Speziell ist der Träger nach Art eines polygonalen Rahmens ausgebildet, an dessen Eckpunkte die Klemmen befestigt sind.

Alternativ oder ergänzend zu der einstückigen Ausgestaltung des Trägers besteht das Dämpfungselement aus einem halbleitfähigen Material. Unter "halbleitfähigem Material" wird allgemein ein Material verstanden, dessen spezifischer elektrischer Widerstand zwischen dem eines typischen Leiters und dem eines typischen Isolators liegt. Für ein halbleitendes Material gilt dabei im Allgemeinen ein Bereich für den spezifischen Widerstand von 100 bis 10¹² (Ω*mm²)/m.

In bevorzugter Ausgestaltung liegt dabei der spezifische Widerstand im Bereich von 1*10² bis 1*10¹⁰(Ω*mm²)/m und insbesondere im Bereich von 1*10⁴ bis 1*10⁸ (Ω*mm²)/m. Der spezifische Widerstand bezieht sich dabei jeweils auf den Widerstand des Materials bei Umgebungstemperatur (20°C).

Bei Feldabstandhaltern besteht die Anforderung eines elektrischen Potentialausgleichs zwischen dem (Leiter-)Seil und den Klemmen bzw. dem Träger. Im Falle einer isolierenden Aufhängung des jeweiligen Seils würde die Potentialdifferenz ggf. Entladungseffekte und Überschläge bedingen, die zu einer Materialbelastung der Seile und/oder des Materials des Feldabstandhalters und somit zu einem vorzeitigen Verschleiß führen können.

Durch die Ausgestaltung des Dämpfungselements mit elektrischer Leitfähigkeit sind daher in dem Dämpfungselement zwei Funktionen integriert, nämlich zum einen die Dämpfungsfunktion und zum anderen eine elektrisch leitende Verbindung, so dass ein Potenzialausgleich stattfindet und keine Potenzialunterschiede mehr vorliegen oder solche zumindest stark verringert werden. Die Gefahr von Entladungseffekten und Überschlägen und damit die Gefahr von Beschädigungen wird also verringert oder sogar vermieden. Gleichzeitig weist das Dämpfungselement weiterhin die erforderlichen Dämpfungseigenschaften auf. Für diese Dämpfungseigenschaften besteht das Dämpfungselement insbesondere aus einem elastomeren Kunststoff oder Gummi, welcher eine elektrische Leitfähigkeit aufweist. Weiterhin ist es geeignet geformt und angeordnet, so dass die Schwingungen und / oder Kippbewegungen geeignet gedämpft werden.

Zur Ausbildung der elektrischen (Halb-)Leitfähigkeit wird für das halbleitfähige Material bevorzugt ein mit elektrisch leitfähigen Teilchen gefüllter Kunststoff verwendet. Bei diesen Teilchen handelt es sich beispielsweise um Rußteilchen oder um sonstige an sich bekannte Teilchen zur Einbringung einer elektrischen Leitfähigkeit in einen Kunststoff.

Als Kunststoff, also quasi als Matrix, in die der Füllstoff eingebracht ist, wird vorzugsweise ein elastomerer Kunststoff, beispielsweise ein thermoplastisches Elastomer, verwendet. Speziell wird EPDM (Ethylen-Propylen-Dien-Kautschuk) eingesetzt.

Neben der Einbringung von elektrisch leitfähigen Teilchen besteht grundsätzlich auch die Möglichkeit, einen intrinsisch leitfähigen Kunststoff zu verwenden.

Das Dämpfungselement weist vorzugsweise eine Shore A-Härte im Bereich zwischen 55 bis 85, insbesondere im Bereich zwischen 65 und 75 Shore A auf.

Der Träger weist weiterhin einen von einer Wandung begrenzten Aufnahmeraum auf, in dem ein Endstück des Klemmarms zusammen mit dem Dämpfungselement einliegt. Das Dämpfungselement liegt dabei in der Aufnahme zumindest passgenau ein. Hierunter wird verstanden, dass zwischen dem Dämpfungselement und der Wandung des Aufnahmeraums zumindest in einer Wirkrichtung, in der das Dämpfungselement dämpfend auf eventuelle Schwingungen einwirken soll, zumindest spielfrei und vorzugsweise unter Vorspannung in dem Aufnahmeraum einliegt. Hierdurch werden eventuelle Schwenk-Bewegungen des Klemmarms um die erwähnte Schwenkachse in das Dämpfungselement eingeleitet, welches sich unmittelbar an der Wandung abstützt. In bevorzugter Ausgestaltung liegt das Dämpfungselement mit Übermaß im Aufnahmeraum ein, d.h. im Ausgangszustand weist das Dämpfungselement eine größere Abmessung als der Aufnahmeraum auf. Das Dämpfungselement wird also beim Einfügen in den Aufnahmeraum komprimiert. Dadurch liegt das Dämpfungselement in dem Aufnahmeraum kraftschlüssig ein.

Durch den Träger sind daher insgesamt Einhausungen ausgebildet, die insbesondere allseitig bis auf eine Einstecköffnung den Aufnahmeraum vollflächig umschließen. Der Aufnahmeraum ist daher lediglich einseitig offen und vorzugsweise durch die Wandung vollständig geschlossen, bis auf die Einstecköffnung für den Klemmarm und dem Dämpfungselement sowie bis auf Bolzenführungen und ggf. eine Entwässerungsöffnung. Daneben weist der Aufnahmeraum keine weiteren Ausnehmungen oder Unterbrechungen auf. Dadurch wird insgesamt eine hohe Steifigkeit und Festigkeit des einstückigen Gussbauteils erreicht

Die Wandung weist zwei gegenüberliegende und parallel zueinander verlaufende Seitenwände auf, deren Abstand zueinander eine Öffnungsweite der Einstecköffnung definiert. Die beiden Seitenwände sind beidseitig jeweils von einer Deckelplatte begrenzt, die eine obere und untere Begrenzung des Aufnahmeraums definieren. Weiterhin wird der Aufnahmeraum gegenüberliegend zur Einstecköffnung von einem Bodenbereich begrenzt. In diesem ist zweckdienlicherweise die bereits erwähnte Entwässerungsöffnung angebracht. Die Öffnungsweite der Einstecköffnung entspricht einer Breite des Dämpfungselements. Der Abstand zwischen den beiden Deckplatten definiert eine Höhe des Aufnahmeraums. Diese Höhe des Aufnahmeraums entspricht einer Höhe des Dämpfungselements. Unter "entsprechend" wird hierbei verstanden, dass die jeweilige Abmessung des Dämpfungselements identisch ist oder ein Übermaß aufweist.

Insgesamt ist hierdurch ein zumindest weitgehend geschlossener Aufnahmeraum ausgebildet. In diesem liegt das Dämpfungselement quasi gekapselt und vor Umwelteinflüssen geschützt ein. Speziell ist das Dämpfungselement beispielsweise vor belastender UV-Strahlung geschützt.

In bevorzugter Weiterbildung ist die den Aufnahmeraum begrenzende Wandung durchgehend glatt ausgebildet und weist keine in den Aufnahmeraum hineinragende Innenkonturen auf. Die zuvor erwähnten, parallel zueinander verlaufenden Seitenwände, die gegenüberliegenden Deckplatten sowie der Bodenbereich, sind daher jeweils unstrukturiert ohne Erhebungen oder Vertiefungen ausgebildet. Dies erlaubt eine einfache Montage durch Einstecken des mit dem Dämpfungselement vorbereiteten Klemmarms.

Im Hinblick auf eine möglichst hohe Stabilität des Trägers weist dieser zwischen zwei benachbarten Aufnahmen jeweils eine Strebe auf, die im Querschnitt insbesondere nach Art eines Doppel-T-Trägers ausgebildet ist. Diese Streben gehen dabei jeweils in die Einhausungen, also in die Seitenwand- oder Bodenwandbereiche der Wandung der jeweiligen Einhausung über. Die Einhausungen zusammen mit den Streben bilden insbesondere einen rahmenartigen Träger aus.

Zur Befestigung des Klemmarms in der Aufnahme weist der Klemmarm eine Bolzenaufnahme und die Wandung, insbesondere die Deckplatten, gegenüberliegende Bolzenführungen auf. Der Klemmarm ist mithilfe eines Bolzens befestigt, welcher in den Bolzenführungen gehalten und durch die Bolzenaufnahme des Dämpfungselements und Klemmarms hindurchgeführt ist. Der Bolzen definiert dabei zugleich eine Schwenkachse, um die eine zumindest geringfügige Schwenkbeweglichkeit der Klemme ermöglicht ist.

Weiterhin weist das Dämpfungselement einen Hohlzapfen auf, welcher in die Bolzenaufnahme am Klemmarm eingesteckt ist. Der Bolzen ist durch den Hohlzapfen spielfrei und insbesondere mit (leichter) Vorspannung geführt, spielfrei, jedoch schwenkbeweglich hindurchgeführt. Der Hohlzapfen selbst liegt vorzugsweise ebenfalls spielfrei in der Bolzenaufnahme ein. Durch diese Maßnahme wird ein inniger Kontakt zwischen dem Bolzen zum Dämpfungselement und über dieses zum Klemmarm erzielt, sodass insgesamt eine gute mechanische sowie elektrisch leitfähige Verbindung zwischen Klemmarm und Träger ausgebildet ist.

Bei der Montage wird zunächst das Dämpfungselement auf den Klemmarm gesteckt und anschließend wird der der Klemmarm mit dem Dämpfungselement in den Aufnahmeraum eingeschoben, anschließend wird der Bolzen durch die Bolzenführungen sowie die Bolzenaufnahme hindurchgesteckt.

Für eine zuverlässige Verbindung zwischen Bolzen und dem Träger (der Wandung der Aufnahme) ist der Bolzen in bevorzugter Ausgestaltung weiterhin in zumindest einer und vorzugsweise in beiden Bolzenführungen verstemmt. Nach dem Durchstecken des Bolzens durch die Bolzenführungen wird der Bolzen hierzu insbesondere in Axialrichtung, also in Längsrichtung des Bolzens, verstemmt. Dadurch ist er gegen ein Herausfallen gesichert.

Das Dämpfungselement selbst ist in bevorzugter Ausgestaltung zweiteilig aus zwei Halbteilen ausgebildet. Jedes der Halbteile ist dabei jeweils auf den Klemmarm aufgesteckt. Zweckdienlicherweise sind die Halbteile dabei derart konturiert, dass sie sich im aufgesteckten Zustand in einer Teilungsebene aneinander abstützen.

So weist beispielsweise jedes der Halbteile einen Teil-Hohlzapfen auf, die gemeinsam den Hohlzapfen bilden. Die beiden Teil-Hohlzapfen liegen im montierten Zustand vorzugsweise aneinander an.

Die beiden Halbteile sind in zweckdienlicher Ausgestaltung dabei als Gleichteile ausgebildet, wodurch die Kosten gering gehalten sind.

In bevorzugter Ausgestaltung weist der Klemmarm in einem Endbereich, der in der Aufnahme einliegt, einen Querarm auf, sodass in diesem Endbereich ein Kreuz ausgebildet ist. In dessen Zentrum ist dabei die Bolzenaufnahme ausgebildet.

Der Klemmarm und insbesondere das zuvor beschriebene und durch den Querarm ausgebildete Kreuz ist vom Dämpfungselement formschlüssig umgriffen. Vorzugsweise werden hierbei die Stirnenden des Querarms frei gelassen. Diese durchdringen daher das Dämpfungselement. Zweckdienlicherweise weist der Querarm dabei eine Länge auf, die an die Öffnungsweite der Aufnahme, also an den Abstand der zuvor erwähnten Seitenwände der Aufnahme, angepasst ist, derart, dass der Querarm zu den beiden gegenüberliegenden Wänden einen definierten Spalt aufweist. Dieser Spalt begrenzt dabei in definierter Weise eine Auslenkung bei einer Schwenk- und / oder Kippbewegung.

In bevorzugter Ausgestaltung ist das Dämpfungselement gebildet durch zwei gegenüberliegende insbesondere plattenförmige Trägerelemente sowie durch vier insbesondere massive Dämpfungsnoppen und den Hohlzapfen. Die Trägerelemente können grundsätzlich unterschiedlich ausgebildet sein, beispielsweise rahmen- oder gerüstartig. Bevorzugt ist eine plattenartige Ausgestaltung, bei der das Trägerelement eine durchgehende Materiallage ausbildet. Nachfolgend wird ohne Beschränkung der Allgemeinheit das jeweilige Trägerelement als Platte bezeichnet.

Die Dämpfungsnoppen sowie der Hohlzapfen erstrecken sich zwischen den Platten und definieren insgesamt eine Höhe des Dämpfungselements. Weiterhin umgreifen die vier Dämpfungsnoppen das ausgebildete Kreuz des Klemmarms. Hierunter wird verstanden, dass die Dämpfungsnoppen in jeweils einem Quadranten zwischen dem Querarm und einem Längsarm des Kreuzes insbesondere passgenau einliegen. Hierdurch wird eine gute formschlüssige Fixierung des Dämpfungselements am Klemmarm erreicht. Die gewünschte Dämpfung der Bewegung wird hauptsächlich und insbesondere vollständig über die Dämpfungsnoppen erreicht. Die Dämpfungsnoppen liegen daher jeweils in einem Zwischenraum zwischen dem Klemmarm und einer Wandung des Aufnahmeraums ein. Bei einer Relativbewegung, speziell einer Schwingbewegung, zwischen dem Klemmarm und dem Träger werden die Dämpfungsnoppen zwischen dem Klemmarm und der Wandung komprimiert, so dass der gewünschte Dämpfungseffekt erreicht wird.

Wie zuvor erwähnt, ist das Dämpfungselement aus zwei Halbteilen ausgebildet. Jedes dieser Halbteile weist daher jeweils genau eine Platte sowie vier Halbnoppen sowie den bereits erwähnten Teil-Hohlzapfen auf. Jeweils zwei gegenüberliegende Halbnoppen bilden einen Dämpfungsnoppen aus. Die vier Dämpfungsnoppen spannen in Aufsicht betrachtet ein Viereck auf, in dessen Zentrum der Hohlzapfen angeordnet ist.

Durch diesen Aufbau ist das Dämpfungselement in bevorzugter Ausgestaltung insgesamt - in einer Aufsicht betrachtet - in etwa X- oder schmetterlingsförmig ausgebildet. Jeweils zwei Dämpfungsnoppen liegen zusammen mit dem Hohlzapfen auf einer Linie, wobei die beiden Linien sich nach Art eines X kreuzen. Speziell ist eine schmetterlingsförmige Ausgestaltung vorgesehen. Hierunter wird verstanden, dass die jeweilige Platte zwischen zwei benachbarten Dämpfungsnoppen jeweils nach innen in Richtung zum Hohlzapfen hin gewölbt verläuft. In bevorzugter Ausgestaltung sind dabei zwei unterschiedliche Paare von gegenüberliegenden Wölbungen vorgesehen. Bei dem einen gegenüberliegenden Paar verläuft die Platte durchgängig, bei dem anderen gegenüberliegenden Paar ist jeweils am tiefsten, also zum Hohlzapfen hin orientierten Punkt der Wölbung, ein Schlitz eingebracht, der insbesondere bis zum Hohlzapfen verläuft. Die Platte ist in ihren Eckbereichen, also in ihren Bereichen, an denen die Dämpfungsnoppen ausgebildet sind, jeweils abgerundet ausgebildet, vorzugsweise im gleichen Radius wie die Dämpfungsnoppen, insbesondere fluchtet die abgerundete Eckkontur der Platte im Bereich einer jeweiligen Noppe mit einer Mantelfläche der Noppe.

Insgesamt zeichnet sich der hier beschriebene einstückige Feldabstandshalter durch eine einfache Montage aus, die insbesondere ohne Verschraubungen auskommt. Der Feldabstandhalter wird lediglich durch Zusammen- und Ineinanderstecken vormontiert. Es erfolgt lediglich ein Befestigen des Bolzens in den Bolzenführungen insbesondere durch Verstemmen. Sonstige Maßnahmen zum Zusammenbau sind nicht erforderlich und vorgesehen. Speziell ist der Feldabstandhalter derart ausgebildet, dass dieser ausschließlich durch die Ausführung der folgenden Schritte vormontierbar ist und vormontiert wird.
- Aufstecken der Halbteile auf einen jeweiligen Klemmarm,
- spielfreies Einstecken des jeweils mit den Halbteilen vorbereiteten Klemmarms in den jeweiligen Aufnahmeraum, insbesondere derart, dass das Dämpfungselement unter Vorspannung im Aufnahmeraum einliegt, sowie
- Befestigen des Bolzens an den Bolzenführungen insbesondere durch Verstemmen.

Unter vormontiert oder vormontierbar wird vorliegend eine Montagesituation verstanden, bei der der Feldabstandhalter lediglich noch zur Endmontage an den Seilen befestigt werden muss.

Ein Ausführungsbeispiel der Erfindung wird nachfolgend anhand der Figuren näher erläutert. Diese zeigen:
- Fig. 1: einen Feldabstandhalter in einer perspektivischen Darstellung,
- Fig. 2: den Feldabstandhalter gemäß Fig. 1 in einer Seitendarstellung mit einer Schnittlinie entlang einer Schnittebene A-A,
- Fig. 3: die Schnittansicht gemäß der Schnittebene A-A in Fig. 2,
- Fig. 4: eine Schnittdarstellung gemäß der Schnittlinie B-B in Fig. 3,
- Fig. 5A: eine perspektivische Aufsicht auf eine Oberseite eines Halbteils des Dämpfungselements,
- Fig. 5B: eine perspektivische Ansicht auf eine Unterseite des Halbteils des Dämpfungselements,
- Fig. 5C: eine Schnittansicht entlang der Schnittlinie C-C in Fig. 5A,
- Fig. 6: eine alternative Ausgestaltung eines Feldabstandhalters für zwei Seile sowie
- Fig. 7: eine alternative Ausgestaltung eines Feldabstandhalters für drei Seile mit einer Spiralbefestigung.

In den Figuren sind gleich wirkende Teile mit den gleichen Bezugszeichen versehen.

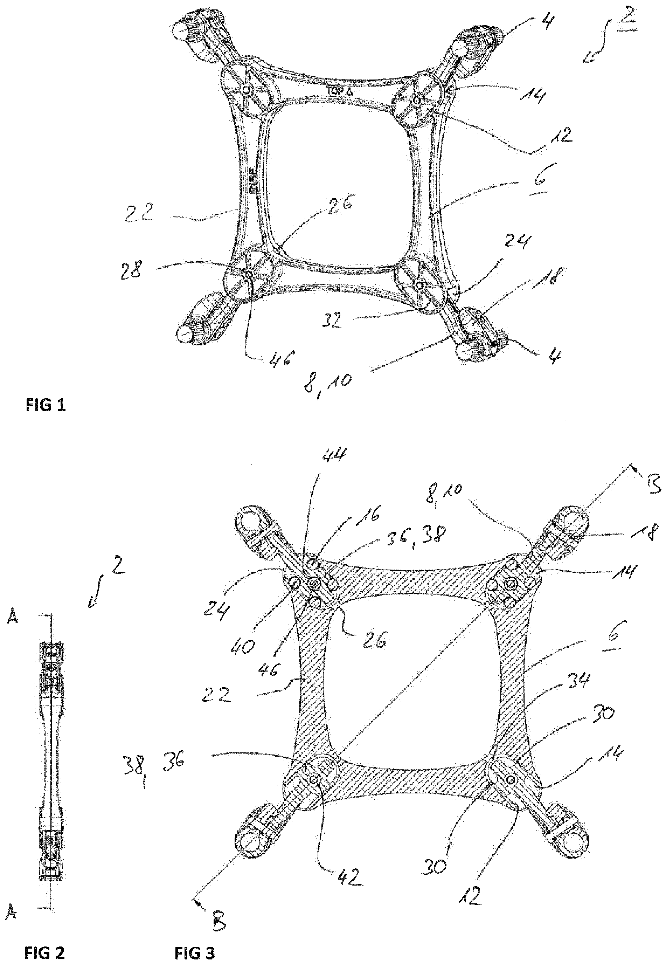

Der in der Fig. 1 dargestellte Feldabstandhalter 2 ist zur klemmenden Halterung von insgesamt vier (Leiter-)Seilen 4 eines Bündelleiters einer Freileitung ausgebildet. Der Feldabstandhalter 2 weist einen einstückigen, als Gussbauteil ausgebildeten Träger 6 sowie für jedes Seil 4 jeweils eine Klemme 8 auf. Eine jeweilige Klemme 8 weist dabei einen Klemmarm 10 auf, welcher jeweils schwenkbeweglich am Träger 6 befestigt ist.

Der Träger weist für die Aufnahme eines jeweiligen Klemmarms 10 einen durch eine Wandung 12 begrenzten Aufnahmeraum 14 auf. In diesem liegt ein End-Teilstück des Klemmarms 10 zusammen mit einem Dämpfungselement 16 (vgl. hierzu insbesondere Fig. 3) ein. Die Wandung 12 definiert insofern eine Einhausung, in der der Klemmarm 10 mit dem Dämpfungselement 16 passgenau einliegt.

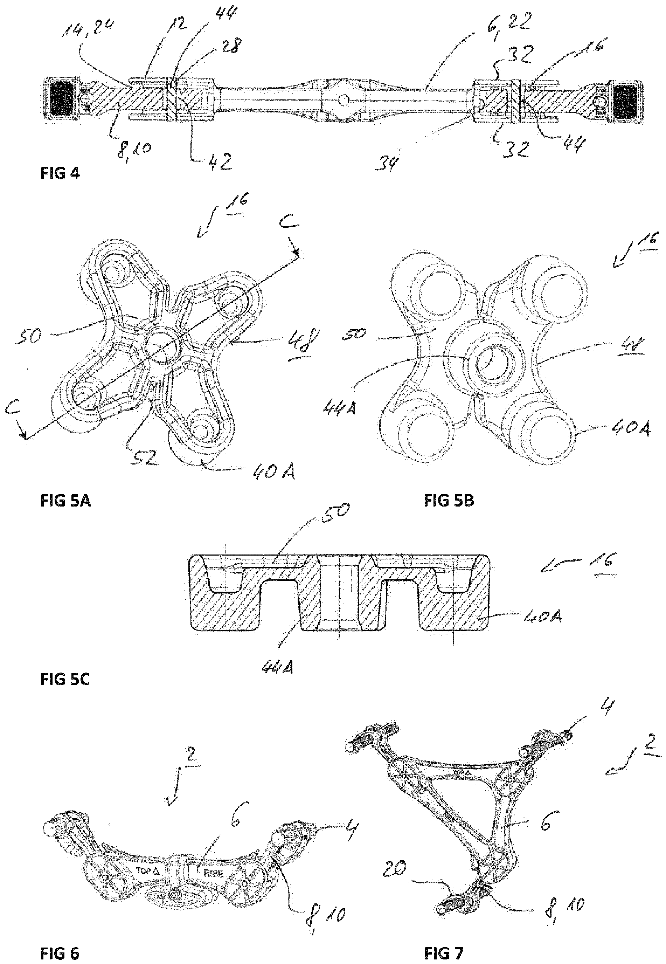

Im Ausführungsbeispiel der Fig. 1 weist die Klemme 8 zum Klemmen des Seils 4 neben dem Klemmarm 10 noch ein zusätzliches Klemmteil 18 in Form einer Halbschale auf. Das Klemmteil ist mit dem Klemmarm 10 über eine Schraube zur klemmenden Fixierung des Seils verspannt. Alternativ kann das Klemmteil 18 auch anderweitig, beispielsweise nach Art einer Spirale 20, ausgebildet sein, wie es beispielsweise im Zusammenhang mit der Fig. 7 dargestellt ist.

Bei der Ausgestaltung der Fig. 1 für die vier Seile 4 ist der Träger 6 insgesamt in Aufsicht betrachtet rechteckförmig, insbesondere in etwa quadratisch ausgebildet.

Die insgesamt vier Aufnahmeräume 14 (Einhausungen) sind dabei jeweils an den Ecken ausgebildet, wobei eine Längsorientierung des Aufnahmeraums 14 bzw. der Einhausung in Diagonalrichtung orientiert ist.

Zwei einander benachbarte Einhausungen sind jeweils durch eine Strebe 22 miteinander verbunden, welche zusammen mit den Einhausungen das einstückige Gussbauteil ausbildet. Weitere Bauteile weist der Träger 6 nicht auf. Die Streben sind - im Querschnitt betrachtet - bevorzugt nach Art eines Doppel-T-Trägers ausgebildet. Die Streben gehen nahtlos in die jeweilige Wandung 12 über.

Die Wandung 12 und damit die Einhausung umschließt den Aufnahmeraum 14 vollständig bis auf eine Einstecköffnung 24 und bis auf zwei gegenüberliegend ausgebildeten Bolzenführungen 28. Bei Bedarf ist weiterhin eine Entwässerungsöffnung 26 vorgesehen. Ansonsten ist die Einhausung und damit die Wandung 12 vollständig geschlossen ausgebildet. Sie ist gebildet durch zwei gegenüberliegende, parallel zueinander verlaufende Seitenwände 30, die zwischen zwei wiederum gegenüberliegenden Deckplatten 32 angeordnet sind. Gegenüberliegend der Einstecköffnung 24 ist der Aufnahmeraum dann weiterhin durch eine Bodenwand 34 begrenzt, die gekrümmt ausgebildet ist und die die zwei parallel verlaufenden Seitenwände 30 miteinander verbindet und ebenso wie diese sich zwischen den Deckplatten 32 erstreckt.

Eine vormontierte Situation des Feldabstandhalters 2, also die Vormontagesituation, bevor der Feldabstandhalter 2 an den Seilen 4 befestigt wird, ist am besten aus der Fig. 3 zu entnehmen. In dieser ist bei den beiden Klemmen in der oberen Bildhälfte jeweils das Dämpfungselement 16 dargestellt, wohingegen das jeweilige Dämpfungselement 16 bei den beiden Klemmen 8 in der unteren Bildhälfte nicht dargestellt ist.

Wie hieraus gut zu erkennen ist, weist der jeweilige Klemmarm 10 in einem in dem Aufnahmeraum 14 einsteckenden Endbereich einen Querarm 36 auf, welcher quer (senkrecht) zu einem Längsarm orientiert ist. Dieser erstreckt sich dabei typischerweise in Diagonalrichtung bzw. in Längserstreckungsrichtung des Aufnahmeraums 14. Der Querarm 36 weist dabei vorzugsweise eine Länge auf, die an eine Öffnungsweite der Einstecköffnung 24 und damit auch an einen Abstand der parallel zueinander verlaufenden Seitenwände 30 angepasst ist. Der Querarm 36 weist dabei zu den gegenüberliegenden Seitenwänden 30 jeweils einen definierten Spalt auf. Der Querarm 36 bildet mit einem Längsarm bzw. dem restlichen Klemmarm 10 insofern ein Kreuz 38 aus.

Dieses wird - wie in der oberen Bildhälfte der Fig. 3 zu erkennen ist - von insgesamt vier Dämpfungsnoppen 40 des Dämpfungselements 16 und damit von dem Dämpfungselement 16 formschlüssig umgriffen. Die einzelnen Dämpfungsnoppen 40 liegen dabei jeweils in einem freien Quadranten zwischen Querarm 36 und Längsarm ein. Der Übergang zwischen Querarm 36 und Längsarm ist gerundet ausgebildet und entspricht der Rundung der Dämpfungsnoppen 40.

Im Zentrum des Kreuzes 38 ist weiterhin eine hohlzylindrische Durchführung 42 ausgebildet. In diese ist ein Hohlzapfen 44 des Dämpfungselements 16 eingesteckt. Durch den Hohlzapfen 44 und damit auch durch die Durchführung 42 ist ein Bolzen 46 hindurchgeführt. Dieser ist in der endmontierten Position endseitig jeweils mit den bereits erwähnten Bolzenführungen 28 in den Deckplatten 32 verbunden, insbesondere verstemmt. Der Bolzen 46 definiert dabei zugleich eine Schwenkachse, um die die jeweilige Klemme 8 zumindest geringfügig schwenkbar am Träger 6 befestigt ist.

Die Fig. 4 zeigt eine Querschnittsdarstellung entlang der Schnittlinie B-B gemäß der Fig. 3. Entsprechend ist auf der linken Seite eine Schnittansicht des Aufnahmeraums 14 ohne und auf der rechten Seite mit dem Dämpfungselement 16 zu erkennen. Hieraus ist insbesondere zu entnehmen, dass der Aufnahmeraum 14 eine Höhe aufweist, welche durch den Abstand zwischen den zwei gegenüberliegenden und parallel zueinander verlaufenden Deckplatten 32 definiert ist. Diese Höhe ist dabei größer als eine entsprechende Höhe des Klemmarms. Die Höhe entspricht demgegenüber jedoch einer Höhe des Dämpfungselements 16, welches also passgenau zwischen den beiden Deckplatten 32 einliegt. Wie bereits aus der Fig. 3 zu erkennen ist, entspricht die Breite des Dämpfungselements 16 der Öffnungsweite und liegt somit auch in dieser Erstreckungsrichtung passgenau im Aufnahmeraum 14 ein. Im Ausgangszustand, bevor also das Dämpfungselement 16 in den Aufnahmeraum 14 eingebracht wird, weist das Dämpfungselement 16 vorzugsweise ein Übermaß auf, so dass das Dämpfungselement 16 innerhalb des Aufnahmeraums 14 verspannt ist. Dadurch ist in das Dämpfungselement insbesondere auch bereits eine Vorspannung eingebracht, wodurch das Dämpfungsverhalten (positiv) beeinflusst ist.

In den Fig. 5A bis 5C ist die spezielle Ausgestaltung eines jeweiligen Halbteils 48 des Dämpfungselements 14 dargestellt. Die Fig. 5A zeigt dabei eine perspektivische Aufsicht auf eine Oberseite und die Fig. 5B eine perspektivische Ansicht auf eine Unterseite. Zwei Halbteile 48 werden mit ihren Unterseiten zueinander orientiert jeweils von gegenüberliegenden Seiten auf den jeweiligen Klemmarm 10 aufgesteckt. Im aufgesteckten Zustand berühren sich die beiden Halbteile 48.

Die jeweiligen Halbteile 48 weisen an ihrer Oberseite eine jeweilige Platte 50 auf, von der an den Eckpunkten sich jeweils Teilnoppen 40A erstrecken, die dann zusammen mit den jeweiligen Teilnoppen 40A des anderen Halbteils 48 die bereits erwähnten Dämpfungsnoppen 40 ausbilden. Im Zentrum ist weiterhin ein Teil-Hohlzapfen 44A ausgebildet, der sich dann ebenfalls zu dem Hohlzapfen 44 ergänzt. Wie insbesondere aus der Fig. 5C zu erkennen ist, sind die Teilnoppen 40A zumindest in ihrem unteren Endbereich als massive Dämpfungsnoppen aus Vollmaterial ausgebildet.

Wie speziell aus der Ansicht der Fig. 5A zu erkennen ist, ist das jeweilige Halbteil 48 - in einer Aufsicht betrachtet - in etwa schmetterlingsförmig ausgebildet. Die gegenüberliegenden Seiten der jeweiligen Platte 50 verlaufen jeweils konkav nach innen und bilden daher Einbuchtungen aus. Dabei sind insbesondere zwei unterschiedlich ausgebildete Paare von Einbuchtungen ausgebildet. Während das eine gegenüberliegende Paar durchgehend ist, weist das andere Paar im Mittenbereich eine Unterbrechung und einen in Richtung auf den Hohlzapfen 44 gerichteten Schlitz 52 auf.

Weiterhin ist zu erkennen, dass die Platte 50 an ihrer Oberseite mit Vertiefungen versehen ist, wobei diese im Bereich der jeweiligen Teilnoppe 40A nach unten gezogen ist (maximal bis zur Hälfte oder 2/3 der Höhe des Halbteils 48).

In den Fig. 6 und 7 sind schließlich alternative Ausgestaltungen eines Feldabstandhalters dargestellt. Gemäß der Fig. 6 ist der Feldabstandhalter 2 für lediglich zwei Seile 4 vorgesehen und der in Fig. 7 dargestellte Feldabstandhalter 2 ist für insgesamt drei Seile ausgebildet. Die Seile 4 sind bei der Ausführungsvariante gemäß der Fig. 7 mit einem Spiral- oder Schraubenstab am Klemmarm 10 klemmend befestigt.

Von besonderer Bedeutung bei dem hier vorgestellten Feldabstandhalter 2 ist die einstückige Ausgestaltung des Trägers 4 als Gussbauteil. Dieses ist dabei aus einem Metall, insbesondere aus Aluminium ausgebildet. Die Klemme 8 ist ebenfalls aus einem leitfähigen Material, speziell Metall und vorzugsweise aus dem gleichen Material wie der Träger ausgebildet. Durch die einstückige integrale Bauweise mit den einzelnen Aufnahmeräumen 14, in die die Klemmarme 10 zusammen mit den Dämpfungselementen 16 einfach eingesteckt werden, ist eine sehr einfache und schnelle Montage/schneller Zusammenbau des Feldabstandhalters 2 ermöglicht. Weiterhin ist durch die einstückige Bauweise eine hohe Integrität und Steifigkeit sowie Festigkeit des Trägers erreicht.

Insgesamt ist vorliegend durch den einstückigen Träger 6 eine integrierte Bauweise erreicht, bei der die jeweils mit dem Dämpfungselement 16 versehenen Klemmarme 10 einfach durch (insbesondere werkzeugfreies) Einstecken in den jeweiligen Aufnahmeraum 14 positioniert werden. Die zuverlässige mechanische Befestigung erfolgt durch ein Verstemmen des jeweiligen Bolzens 46 mit der Bolzenaufnahme 42

Ein weiterer besonderer Aspekt ist in der Ausbildung des Dämpfungselements 16 aus einem halbleitfähigen Material zu sehen. Hierdurch wird eine elektrisch leitende Verbindung zwischen der jeweiligen Klemme 8 und dem Träger 6 gewährleistet, sodass diese auf dem gleichen elektrischen Potenzial liegen. Für die gute elektrische Kontaktierung ist hierbei insbesondere das durch leichtes Übermaß erreichte Anschmiegen des Bolzens 46 im Hohlzapfen 44 und des Dämpfungselementes 16 im Träger 6 hervorzuheben. Der Hohlzapfen 44 liegt am Bolzen 46 nahezu über dessen gesamte Länge an.

Die zuvor beschriebene integrierte Bauweise des einstückigen Trägers 6 und der einfachen Steckverbindung mit den Klemmarmen 10, die mit den elektrisch leitenden Dämpfungselementen 16 versehen sind, begünstigt neben einer einfachen Montage zudem auch die zuverlässige elektrische Verbindung zum Potenzialausgleich.

### Bezugszeichenliste

- 2: Feldabstandhalter
- 4: Seil
- 6: Träger
- 8: Klemme
- 10: Klemmarm
- 12: Wandung
- 14: Aufnahmeraum
- 16: Dämpfungselement
- 18: Klemmteil
- 20: Spirale
- 22: Strebe
- 24: Einstecköffnung
- 26: Entwässerungsöffnung
- 28: Bolzenführungen
- 30: Seitenwände
- 32: Deckplatten
- 34: Bodenwand
- 36: Querarm
- 38: Kreuz
- 40: Dämpfungsnoppen
- 40A: Teilnoppe
- 42: Bolzenaufnahme
- 44: Hohlzapfen
- 44A: Teil-Hohlzapfen
- 46: Bolzen
- 48: Halbteile
- 50: Platte
- 52: Einbuchtung

## Patentansprüche

1. Feldabstandhalter (2) für mehrere Seile (4) einer Freileitung mit einem Träger (6), an dem mehrere Klemmen (8) für jeweils ein Seil (4) befestigt sind, wobei eine jeweilige Klemme (8) einen Klemmarm (10) aufweist, welcher am Träger (6) befestigt ist, wobei ein zwischen dem Klemmarm (10) und dem Träger (6) wirksames elastisches Dämpfungselement (16) angeordnet ist, wobei der Träger (6) für einen jeweiligen Klemmarm (10) einen von einer Wandung (12) begrenzten Aufnahmeraum (14) aufweist, in dem das Dämpfungselement (16) spielfrei und vorzugsweise unter Vorspannung einliegt, und wobei der Klemmarm (10) eine Bolzenaufnahme (42) und die Wandung (12) gegenüberliegende Bolzenführungen (28) aufweist und der Klemmarm (10) in dem Aufnahmeraum (14) über einen Bolzen (46) befestigt ist, welcher von außen durch die Bolzenführungen (28) hindurch und durch die Bolzenaufnahme (42) geführt ist, wobei weiterhin der Träger (6) als ein einstückiges Gussbauteil ausgebildet ist und/ oder das Dämpfungselement (16) aus einem halbleitfähigen Material besteht,
**dadurch gekennzeichnet,**
**dass** das Dämpfungselement (16) einen Hohlzapfen (44) aufweist, der in die Bolzenaufnahme (42) eingesteckt ist und durch den der Bolzen (46) spielfrei hindurchgeführt ist.

2. Feldabstandhalter (2) nach einem der beiden vorhergehenden Ansprüche,
**dadurch gekennzeichnet,**
**dass** das Dämpfungselement (16) in dem Aufnahmeraum (14) unter Vorspannung einliegt.

3. Feldabstandhalter (2) nach einem der vorhergehenden Ansprüche,
**dadurch gekennzeichnet,**
**dass** der Aufnahmeraum (14) eine Einstecköffnung (24) aufweist, über die der Klemmarm (10) zusammen mit dem Dämpfungselement (16) eingesteckt ist, wobei der Aufnahmeraum (4) vorzugsweise durch die Wandung (12) vollständig geschlossen ist, bis auf die Einstecköffnung (24), Bolzenführungen (28) und bei Bedarf einer Entwässerungsöffnung (26).

4. Feldabstandhalter (2) nach einem der vorhergehenden Ansprüche,
**dadurch gekennzeichnet,**
**dass** die den Aufnahmeraum (14) begrenzenden Wandung glatt und ohne in den Aufnahmeraum (14) hinein erstreckende Innenkonturen ausgebildet ist.

5. Feldabstandhalter (2) nach einem der vorhergehenden Ansprüche,
**dadurch gekennzeichnet,**
**dass** der Träger (6) zwischen zwei benachbarten Aufnahmeräumen (14) jeweils eine Strebe aufweist.

6. Feldabstandhalter (2) nach einem der vorhergehenden Ansprüche,
**dadurch gekennzeichnet,**
**dass** der Bolzen (46) in den Bolzenführungen (28) verstemmt ist.

7. Feldabstandhalter (2) nach einem der vorhergehenden Ansprüche,
**dadurch gekennzeichnet,**
**dass** das Dämpfungselement (16) zweiteilig aus zwei Halbteilen (48) ausgebildet ist, und die Halbteile (48) jeweils auf den Klemmarm (10) aufgesteckt sind, wobei die Halbteile (48) bevorzugt als Gleichteile ausgebildet sind.

8. Feldabstandhalter (2) nach einem der vorhergehenden Ansprüche,
**dadurch gekennzeichnet,**
**dass** der Klemmarm (10) einen Querarm (36) aufweist, sodass ein Kreuz (38) ausgebildet ist, in dessen Zentrum die Bolzenaufnahme (42) ausgebildet ist.

9. Feldabstandhalter (2) nach dem vorhergehenden Anspruch,
**dadurch gekennzeichnet,**
**dass** das Dämpfungselement (16) das Kreuz (38) formschlüssig insbesondere unter Freilassung von Stirnenden des Querarms (36) umgreift.

10. Feldabstandhalter (2) nach einem der beiden vorhergehenden Ansprüche,
**dadurch gekennzeichnet,**
**dass** das Dämpfungselement (16) gebildet ist durch zwei gegenüberliegende Platten (50) sowie durch vier Dämpfungsnoppen (40) und dem Hohlzapfen (44), die sich zwischen den Platten (50) erstrecken, wobei die Dämpfungsnoppen (40) das Kreuz (38) umgreifen.

11. Feldabstandhalter (2) nach einem der vorhergehenden Ansprüche,
**dadurch gekennzeichnet,**
**dass** das Dämpfungselement (16) - in einer Aufsicht betrachtet - X-förmig ausgebildet ist.

12. Verfahren zur Vormontage eines Feldabstandhalters (2) nach einem der vorhergehenden Ansprüche und nach Anspruch 7,
wobei der Feldabstandhalter (2) ausschließlich durch folgende Schritte vormontiert wird:
- Aufstecken der Halbteile (48) auf einen jeweiligen Klemmarm (10)
- spielfreies Einstecken des jeweils mit den Halbteilen (48) vorbereiteten Klemmarms (10) in den jeweiligen Aufnahmeraum (14) sowie
- Befestigen des Bolzens (46) an den Bolzenführungen (28).

13. Verfahren nach dem vorhergehenden Anspruch, wobei der jeweilige Bolzen (46) durch Verstemmen an den Bolzenführungen (28) befestigt wird.

## Claims

1. Spacer (2) for multiple cables (4) of an overhead line, having a carrier (6) to which multiple clamps (8) for in each case one cable (4) are fastened, wherein a respective clamp (8) has a clamping arm (10) which is fastened to the carrier (6), wherein an elastic damping element (16) acting between the clamping arm (10) and the carrier (6) is arranged, wherein, for a respective clamping arm (10), the carrier (6) has an accommodating space (14) which is delimited by a wall (12) and in which the damping element (16) lies without play and preferably under preload, and wherein the clamping arm (10) has a pin receptacle (42) and the wall (12) has oppositely situated pin guides (28) and the clamping arm (10) is fastened in the accommodating space (14) via a pin (46) which is guided from the outside through the pin guides (28) and through the pin receptacle (42), wherein furthermore the carrier (6) is designed as a one-piece cast component and/or the damping element (16) consists of a semiconductive material,
**characterized**
**in that** the damping element (16) has a hollow peg (44) which is plugged into the pin receptacle (42) and through which the pin (46) is guided without play.

2. Spacer (2) according to either of the two preceding claims,
**characterized**
**in that** the damping element (16) lies in the accommodating space (14) under preload.

3. Spacer (2) according to either of the preceding claims,
**characterized**
**in that** the accommodating space (14) has a plug-in opening (24) via which the clamping arm (10), together with the damping element (16), is plugged in, wherein the accommodating space (4) is preferably closed by the wall (12) completely apart from the plug-in opening (24), pin guides (28) and, according to requirement, a drainage opening (26).

4. Spacer (2) according to one of the preceding claims, **characterized**
**in that** the wall delimiting the accommodating space (14) is designed to be smooth and without inner contours that extend into the accommodating space (14) .

5. Spacer (2) according to one of the preceding claims, **characterized**
**in that**, between two adjacent accommodating spaces (14), the carrier (6) has in each case one strut.

6. Spacer (2) according to one of the preceding claims, **characterized**
**in that** the pin (46) is wedged in the pin guides (28) .

7. Spacer (2) according to one of the preceding claims, **characterized**
**in that** the damping element (16) is formed in two parts from two half-parts (48), and the half-parts (48) are each plugged onto the clamping arm (10), wherein the half-parts (48) are preferably designed as identical parts.

8. Spacer (2) according to one of the preceding claims, **characterized**
**in that** the clamping arm (10) has a transverse arm (36) such that there is formed a cross (38) in whose centre the pin receptacle (42) is formed.

9. Spacer (2) according to the preceding claim, **characterized**
**in that** the damping element (16) engages around the cross (38) in a form-fitting manner, in particular while leaving extreme ends of the transverse arm (36) free.

10. Spacer (2) according to either of the two preceding claims,
**characterized**
**in that** the damping element (16) is formed by two oppositely situated plates (50) and by four damping studs (40) and the hollow peg (44), which extend the plates (50), wherein the damping studs (40) engage around the cross (38).

11. Spacer (2) according to one of the preceding claims, **characterized**
**in that** the damping element (16) -when seen in plan view - is of X-shaped form.

12. Method for pre-assembling a spacer (2) according to one of the preceding claims and according to Claim 7,
wherein the spacer (2) is pre-assembled exclusively by the following steps:
- plugging the half-parts (48) onto a respective clamping arm (10),
- plugging without play into the respective accommodating space (14) the clamping arm (10) prepared in each case with the half-parts (48), and
- fastening the pin (46) to the pin guides (28).

13. Method according to the preceding claim, wherein the respective pin (46) is fastened to the pin guides (28) by way of wedging.

## Revendications

1. Écarteur de champ (2) pour plusieurs câbles (4) d'une ligne aérienne avec un support (6) sur lequel sont fixées plusieurs pinces (8) pour respectivement un câble (4), une pince respective (8) présentant un bras de serrage (10) qui est fixé au support (6), un élément d'amortissement élastique (16) agissant entre le bras de serrage (10) et le support (6) étant agencé, le support (6) présentant pour un bras de serrage respectif (10) un espace de réception (14) délimité par une paroi (12), dans lequel l'élément d'amortissement (16) est inséré sans jeu et de préférence sous précontrainte, et le bras de serrage (10) présentant un logement de boulon (42) et des guides de boulon (28) opposés à la paroi (12) et le bras de serrage (10) étant fixé dans l'espace de réception (14) par l'intermédiaire d'un boulon (46), qui est guidé de l'extérieur à travers les guides de boulon (28) et à travers le logement de boulon (42), le support (6) étant en outre réalisé sous la forme d'un composant moulé d'un seul tenant et/ou l'élément d'amortissement (16) étant constitué d'un matériau apte à être semiconducteur,
**caractérisé en ce que**
l'élément d'amortissement (16) présente un tourillon creux (44) qui est enfiché dans le logement de boulon (42) et à travers lequel le boulon (46) est guidé sans jeu.

2. Écarteur de champ (2) selon l'une quelconque des deux revendications précédentes, **caractérisé en ce que** l'élément d'amortissement (16) est inséré sous précontrainte dans l'espace de réception (14).

3. Écarteur de champ (2) selon l'une quelconque des revendications précédentes, **caractérisé en ce que** l'espace de réception (14) présente une ouverture d'enfichage (24) par l'intermédiaire de laquelle le bras de serrage (10) est enfiché conjointement avec l'élément d'amortissement (16), l'espace de réception (4) étant de préférence entièrement fermé par la paroi (12), à l'exception de l'ouverture d'enfichage (24), des guides de boulon (28) et, si nécessaire, d'une ouverture de drainage (26).

4. Écarteur de champ (2) selon l'une quelconque des revendications précédentes, **caractérisé en ce que** la paroi délimitant l'espace de réception (14) est réalisée sous forme lisse et sans contours intérieurs s'étendant dans l'espace de réception (14).

5. Écarteur de champ (2) selon l'une quelconque des revendications précédentes, **caractérisé en ce que** le support (6) présente une entretoise entre deux espaces de réception (14) voisins.

6. Écarteur de champ (2) selon l'une quelconque des revendications précédentes, **caractérisé en ce que** le boulon (46) est maté dans les guides de boulon (28).

7. Écarteur de champ (2) selon l'une quelconque des revendications précédentes, **caractérisé en ce que** l'élément d'amortissement (16) est réalisé en deux pièces à partir de deux demi-pièces (48), et les demi-pièces (48) sont respectivement emboîtées sur le bras de serrage (10), les demi-pièces (48) étant de préférence réalisées sous forme de pièces identiques.

8. Écarteur de champ (2) selon l'une quelconque des revendications précédentes, **caractérisé en ce que** le bras de serrage (10) présente un bras transversal (36), de telle sorte qu'une croix (38) est réalisée, au centre de laquelle le logement de boulon (42) est réalisé.

9. Écarteur de champ (2) selon la revendication précédente, **caractérisé en ce que** l'élément d'amortissement (16) entoure la croix (38) par complémentarité de forme, notamment en laissant libres les extrémités frontales du bras transversal (36).

10. Écarteur de champ (2) selon l'une quelconque des deux revendications précédentes, **caractérisé en ce que** l'élément d'amortissement (16) est formé par deux plaques opposées (50) ainsi que par quatre plots d'amortissement (40) et le tourillon creux (44) qui s'étend entre les plaques (50), les plots d'amortissement (40) entourant la croix (38).

11. Écarteur de champ (2) selon l'une quelconque des revendications précédentes, **caractérisé en ce que** l'élément d'amortissement (16) - vu de dessus - est réalisé en forme de X.

12. Procédé de préassemblage d'un écarteur de champ (2) selon l'une quelconque des revendications précédentes et selon la revendication 7, l'écarteur de champ (2) étant préassemblé exclusivement par les étapes suivantes :
- l'emboîtement des demi-pièces (48) sur un bras de serrage (10) respectif
- l'enfichage sans jeu du bras de serrage (10) respectivement préparé avec les demi-pièces (48) dans l'espace de réception (14) respectif ainsi que
- la fixation du boulon (46) sur les guides de boulon (28) .

13. Procédé selon la revendication précédente, dans lequel le boulon respectif (46) est fixé par matage sur les guides de boulon (28).
